(19) **Europäisches Patentamt / European Patent Office / Office européen des brevets**

(11) **EP 3 521 317 A1**

(12) # EUROPEAN PATENT APPLICATION
published in accordance with Art. 153(4) EPC

(43) Date of publication:
**07.08.2019 Bulletin 2019/32**

(21) Application number: **17855845.8**

(22) Date of filing: **19.09.2017**

(51) Int Cl.:
**C08B 11/08** (2006.01)

(86) International application number:
**PCT/JP2017/033789**

(87) International publication number:
**WO 2018/061890 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.09.2016 JP 2016191629**

(71) Applicant: **Sumitomo Seika Chemicals Co., Ltd.
Kako-gun, Hyogo 675-0145 (JP)**

(72) Inventors:
• **YAMAUCHI, Yoh
Osaka-shi
Osaka 541-0041 (JP)**

• **MASUDA, Tsuyoshi
Himeji-shi
Hyogo 672-8076 (JP)**
• **NISHIKAWA, Yusuke
Tokyo 102-0073 (JP)**
• **SHINGAI, Yuji
Himeji-shi
Hyogo 672-8076 (JP)**

(74) Representative: **Elkington and Fife LLP
Prospect House
8 Pembroke Road
Sevenoaks, Kent TN13 1XR (GB)**

(54) **METHOD FOR PRODUCING WATER-SOLUBLE HYDROXYETHYL CELLULOSE**

(57)    A water-soluble hydroxyethyl cellulose is produced by reacting ethylene oxide with an alkali cellulose such that an average additional molar number of ethylene oxide per glucose unit of the alkali cellulose is 0.1 to 1.0 mol to prepare hydroxyethyl cellulose, and mechanically pulverizing the prepared hydroxyethyl cellulose. According to this producing method, it is possible to produce a water-soluble hydroxyethyl cellulose from an alkali cellulose with the usage of ethylene oxide reduced. In addition, the water-soluble hydroxyethyl cellulose produced by this producing method has a loss tangent (tan δ) of a 2% by mass aqueous solution of less than 1.0 in a frequency range of 0.1 to 100 rad/s in general, and exhibits a gel physical property.

EP 3 521 317 A1

## Description

### TECHNICAL FIELD

The present invention relates to a method for producing water-soluble hydroxyethyl cellulose, and in particular, to a method for producing water-soluble hydroxyethyl cellulose by reacting ethylene oxide with alkali cellulose.

### BACKGROUND ART

Water-soluble hydroxyethyl cellulose is a semisynthetic polymer made from cellulose as a raw material. Because water-soluble hydroxyethyl cellulose has properties as a nonionic water-soluble polymer, it has been widely used as a thickener, emulsion stabilizer, dispersant, water retention agent, protective colloid agent or the like in various industrial fields involving, for example, cosmetics, medicines and toiletry products.

Water-soluble hydroxyethyl cellulose is usually produced by either a slurry method or an alkali cellulose method.

The slurry method is a method including reacting cellulose with an alkali such as alkali metal hydroxide in a hydrophilic organic solvent as a reaction solvent to prepare alkali cellulose, and adding ethylene oxide to the reaction solvent containing the alkali cellulose in succession for reaction to produce water-soluble hydroxyethyl cellulose (See, for example, Patent Documents 1 and 2). Examples of the hydrophilic organic solvent used here are aliphatic alcohol such as ethanol, isopropyl alcohol, isobutyl alcohol, tert-butyl alcohol or isoamyl alcohol, ether such as dioxane or 1,2-dimethoxyethane, or ketone such as acetone or methyl ethyl ketone. The slurry method can continuously carry out a step of preparing alkali cellulose and a step of reacting the prepared alkali cellulose with ethylene oxide in the same reaction vessel. In that respect, because it is possible to make the steps of producing water-soluble hydroxyethyl cellulose more efficient and streamlined, the slurry method has been used as a general method for producing water-soluble hydroxyethyl cellulose.

In production of water-soluble hydroxyethyl cellulose by the slurry method, the average additional molar number of ethylene oxide per glucose unit of hydroxyethyl cellulose is controlled to increase. For example, in Patent Document 2, the average additional molar number (degree of molar substitution) of ethylene oxide is controlled to be 2.0 or more, and commercially available water-soluble hydroxyethyl cellulose produced by the slurry method has generally an average additional molar number of ethylene oxide of about 2.5. This is surmised due to the fact that in the process of preparing alkali cellulose using a hydrophilic organic solvent as a reaction solvent, it is difficult to uniformly react each glucose unit of cellulose with an alkali, so that deviation of composition occurs in produced alkali cellulose, which tends to cause nonuniform addition reaction of ethylene oxide with alkali cellulose, or bring a state where ethylene oxide is added in a polymerized state.

Therefore, although the slurry method is advantageous in promoting efficiency and rationalization of the producing steps, the average additional molar number of ethylene oxide is controlled as described above, so that the used amount of ethylene oxide increases.

The alkali cellulose method is a method including immersing cellulose in an aqueous solution of alkali such as alkali metal hydroxide for reaction of the cellulose with the alkali to prepare alkali cellulose, and reacting the alkali cellulose with ethylene oxide to produce water-soluble hydroxyethyl cellulose (See, for example, Patent Documents 3 and 4). An average additional molar number of ethylene oxide per glucose unit in a water-soluble hydroxyethyl cellulose obtained by the alkali cellulose method is set to about 1.5 which is smaller than that by the slurry method. This is surmised due to the fact that in this producing method, it is easy to uniformly react each glucose unit of cellulose with an alkali, so that deviation of composition hardly occurs in produced alkali cellulose, by which addition reaction of ethylene oxide with alkali cellulose tends to be uniform.

An alkali cellulose prepared in the course of the alkali cellulose method tends to generate impurities such as by-products in the reaction with ethylene oxide because excess alkali remains therein. Considering this problem, a purification step of removing impurities such as by-products from the reaction system including produced water-soluble hydroxyethyl cellulose is essentially required in this method. However, such a purification step is so complicated that a large burden is imposed. Therefore, for the alkali cellulose method, there have been suggestions to reduce the burden of purification step. For example, Patent Document 3 proposes that a poorly water-soluble organic solvent is used as the reaction solvent for alkali cellulose and ethylene oxide, and a mixed solvent composed of the poorly water-soluble organic solvent, methanol and water is used as a washing solution for produced hydroxyethyl cellulose. In addition, Patent Document 4 proposes that produced hydroxyethyl cellulose is washed using a mixed solvent composed of a poorly water-soluble organic solvent, methanol and water, and subsequently further washed using a mixed solvent composed of the above mixed solvent and an acid.

In the alkali cellulose method, if the used amount of ethylene oxide is suppressed, the produced amount of impurities such as by-products can be suppressed, and as a result, the burden of purification step can be reduced. However, hydroxyethyl cellulose produced in a condition where the used amount of ethylene oxide is suppressed hardly exhibit water solubility because the average additional molar number of ethylene oxide decreases, and accordingly the number of hydroxyethyl group that is a hydrophilic group decreases.

PRIOR ART DOCUMENTS

PATENT DOCUMENTS

Patent Document 1: Japanese Patent Laid-open Publication No. S59-75902
Patent Document 2: Japanese Patent Laid-open Publication No. H01-123801
Patent Document 3: Japanese Patent Laid-open Publication No. H06-199902
Patent Document 4: Japanese Patent Laid-open Publication No. 2003-12535

SUMMARY OF THE INVENTION

PROBLEMS TO BE SOLVED BY THE INVENTION

The present invention is to produce water-soluble hydroxyethyl cellulose from alkali cellulose with the used amount of ethylene oxide suppressed.

SOLUTIONS TO THE PROBLEMS

A method for producing water-soluble hydroxyethyl cellulose according to the present invention includes steps of: reacting ethylene oxide with alkali cellulose such that an average additional molar number of ethylene oxide per glucose unit of the alkali cellulose is 0.1 to 1.0 mol to prepare hydroxyethyl cellulose; and mechanically pulverizing the prepared hydroxyethyl cellulose.
In general, the alkali cellulose used here is that which is obtained by separating a liquid component from slurry obtained by immersing cellulose in an aqueous solution of an alkali for reaction of the cellulose with the alkali.
In one embodiment of the producing method of the present invention, the ethylene oxide is reacted with the alkali cellulose such that the average additional molar number of ethylene oxide per glucose unit of the alkali cellulose is less than 0.7 mol.
Since the producing method of the present invention includes the step of mechanically pulverizing hydroxyethyl cellulose prepared by reacting ethylene oxide with alkali cellulose, it is possible to produce water-soluble hydroxyethyl cellulose with the used amount of ethylene oxide suppressed.
The water-soluble hydroxyethyl cellulose according to the present invention has an average additional molar number of ethylene oxide per glucose unit of 0.1 to 1.0 mol. In one embodiment of the water-soluble hydroxyethyl cellulose, the average additional molar number of ethylene oxide per glucose unit is less than 0.7.
In general, the water-soluble hydroxyethyl cellulose according to the present invention has a loss tangent (tan $\delta$) of less than 1.0 in a frequency range of 0.1 to 100 rad/s, as a 2% by mass aqueous solution.
Since the average additional molar number of ethylene oxide per glucose unit of the water-soluble hydroxyethyl cellulose according to the present invention is suppressed to 0.1 to 1.0 mol, the aqueous solution of the hydroxyethyl cellulose exhibits a rheological property different from that of an aqueous solution of conventional hydroxyethyl cellulose.
Other objects or results of the present invention may be mentioned in the following detailed description.

BRIEF DESCRIPTION OF THE DRAWINGS

[Fig. 1] A drawing showing an apparatus illustrated in Japanese Pharmaceutical Excipients 1993 supervised by Examination Division, Pharmaceutical Affairs Bureau, the Ministry of Health and Welfare of Japan, Yakuji Nippo, Sections 250 to 254 "Hydroxyethylcellulose, Quantitative Method", used in the Examples and the like.
[Fig. 2] A graph showing the results of loss tangent (tan $\delta$) in the frequency range of 0.1 to 100 rad/s for 2% by mass aqueous solution prepared using each hydroxyethyl cellulose obtained in Example 3 and Comparative Example 2.
[Fig. 3] A graph showing the result of evaluated salt tolerance for hydroxyethyl cellulose obtained in Example 3.

EMBODIMENTS OF THE INVENTION

In a method for producing water-soluble hydroxyethyl cellulose according to the present invention, first, a hydroxyethyl cellulose having an average additional molar number of ethylene oxide within a specific range is prepared. This hydroxyethyl cellulose can be prepared by reacting ethylene oxide with an alkali cellulose.

The alkali cellulose can be prepared by reacting an alkali with cellulose. Examples of the cellulose used here include sheet-like or powder-like cotton linters and wood pulp.

Various kinds of alkalis can be used, as long as they act on the hydroxyl group of cellulose and can form an alkali cellulose, and examples thereof include alkali metal hydroxides such as sodium hydroxide, potassium hydroxide or lithium hydroxide. In particular, it is preferable to use sodium hydroxide because it is inexpensive and versatile.

As a method for reacting an alkali with cellulose, a method including mixing cellulose immersed in an aqueous solution of alkali in a vessel equipped with a stirring blade for about 20 minutes to about 2 hours can be adopted. The concentration of the aqueous solution of alkali used here is not particularly limited, but is preferably set to 10 to 30% by mass in general. In addition, the used amount of the aqueous solution of alkali is preferably set to 1,000 to 6,000 parts by mass, more preferably set to 2,000 to 5,000 parts by mass with respect to 100 parts by mass of cellulose in general, in order to ensure the fluidity of slurry produced by dispersing the cellulose in the aqueous solution of alkali, and enhance the uniformity of reaction of the cellulose with the alkali. Furthermore, the temperature during mixing is preferably set to 20 to 50°C in general.

The intended alkali cellulose is obtained by separating a liquid component containing excess alkali from the slurry containing the alkali cellulose prepared by the above method. As a method for separating the liquid component from the slurry, various solid-liquid separating methods, for example pressure filtration, natural filtration, vacuum filtration or centrifugation filtration, can be adopted. Among these methods, it is particularly preferable to use pressure filtration, because it is possible to squeeze the solid content contained in the slurry, thereby more effectively separating the liquid component containing excess alkali.

In preparation of the intended hydroxyethyl cellulose, ethylene oxide is reacted with the obtained alkali cellulose. Here, the alkali cellulose and ethylene oxide are charged in a reaction vessel, and they are allowed to react with each other with stirring. In this case, it is also possible to charge the reaction vessel together with a reaction solvent to react the alkali cellulose with the ethylene oxide in the reaction solvent. When a reaction solvent is used, uniform reaction of ethylene oxide with each glucose unit of alkali cellulose can be promoted.

The used amount of ethylene oxide is controlled such that the average additional molar number of ethylene oxide per glucose unit of the produced hydroxyethyl cellulose is 0.1 to 1.0 mol (0.1 mol or more and 1.0 mol or less). Particularly, in a preferred embodiment of this producing method, the average additional molar number of ethylene oxide is controlled to be 0.1 mol or more and less than 0.7 mol. Although the rate of addition reaction of ethylene oxide per glucose unit varies depending on reaction conditions, it is about 40 to about 60% in general, so that the average additional molar number of ethylene oxide can be usually controlled to be within the above range by setting the usage of ethylene oxide to 7 to 80 parts by mass or 5 to 100 parts by mass with some allowance with respect to 100 parts by mass of raw material cellulose used for preparation of alkali cellulose.

In production of hydroxyethyl cellulose by conventional slurry methods or alkali cellulose methods, in order to impart water solubility to the produced hydroxyethyl cellulose, the average additional molar number of ethylene oxide per glucose unit is controlled to be about 1.5 to about 2.5 mol, depending on the producing methods. In this case, considering the rate of addition reaction of ethylene oxide per glucose unit, the usage of ethylene oxide is required to be set to 100 to 150 parts by mass with respect to 100 parts by mass of raw material cellulose used for preparation of alkali cellulose. Therefore, according to the producing method of the present invention, the usage of ethylene oxide can be reduced, as compared with conventional producing methods.

When reacting alkali cellulose with ethylene oxide in a reaction solvent, various kinds of reaction solvents can be used, and the type thereof is not particularly limited. As the reaction solvent, in general, it is preferable to use alcohols such as ethanol, isopropyl alcohol, isobutyl alcohol, tert-butyl alcohol or isoamyl alcohol, ethers such as dioxane or 1,2-dimethoxyethane, or ketones such as acetone, methyl ethyl ketone or methyl isobutyl ketone. Two or more of these reaction solvents may be used in combination.

In order to facilitate uniform reaction of ethylene oxide with each glucose unit of alkali cellulose, the usage of the reaction solvent is preferably controlled to be 600 parts by mass or less with respect to 100 parts by mass of alkali cellulose in general.

In the reaction of alkali cellulose with ethylene oxide, in order to promote uniform reaction, contents in a reaction vessel, i.e., an alkali cellulose, ethylene oxide, and, if applicable, a reaction solvent are preferably thoroughly mixed before the reaction is started. For example, in order to allow ethylene oxide to uniformly disperse in the reaction system while suppressing the change in crystallinity of alkali cellulose due to temperature change, the temperature of the contents is controlled to be 10 to 20°C with stirring for about 10 minutes to about 1 hour. Thereafter, the temperature of the contents is raised by heating the reaction vessel to start the reaction of alkali cellulose with ethylene oxide. The reaction temperature is preferably set at 30°C to 80°C, more preferably set at 40 to 60°C in general, in order to smoothly promote the reaction while suppressing rapid rising of the temperature due to exothermic reaction.

Since progress of the reaction of alkali cellulose with ethylene oxide varies depending on reaction conditions such as the reaction temperature, it is difficult to categorically describe the reaction time, but in general the reaction time is about 1 to about 10 hours.

After completion of the reaction, a washing solvent is added to the reaction vessel to wash the reaction system, and impurities such as by-products generated by the reaction and residual alkali are removed by filtration from hydroxyethyl cellulose to yield the intended wet cake of hydroxyethyl cellulose. As the washing solvent, for example, solvents having a composition of 30 to 50% by mass hydrophobic organic solvent, 20 to 60% by mass methanol and 10 to 30% by mass water can be used. The type of hydrophobic organic solvent is not particularly limited, but in general solvents having a solubility in water at 25°C of about 3% by mass or less are preferable. Since such a hydrophobic organic solvent is easily separated from water, it can be easily recovered and purified from the washing solvent after use, and thus easily reused. Preferred examples of the hydrophobic organic solvent are aliphatic ketones having 6 to 10 carbon atoms such as methyl isobutyl ketone, methyl-n-amyl ketone, methyl-n-hexyl ketone, ethyl-n-butyl ketone, di-n-propyl ketone and diisobutyl ketone. Methyl isobutyl ketone is particularly preferable because it has a relatively low boiling point and is easily recovered by distillation.

Next, the obtained wet cake is treated with an acid for neutralization. The type of the acid for neutralization treatment is not particularly limited, but may be either an organic acid or an inorganic acid. Examples of the organic acid include formic acid, acetic acid and propionic acid. Examples of the inorganic acid include nitric acid, hydrochloric acid, sulfuric acid and phosphoric acid. Among them, it is particularly preferable to use acetic acid or nitric acid because salts formed by neutralization of alkali are easily dissolved in the washing solvent and thus washed out.

As a neutralization treatment method for wet cake using an acid, for example, a method including adding an acid to a solvent having similar composition as that of the washing solvent described above to prepare a neutralizing solvent, and pouring wet cake into the neutralizing solvent for washing can be adopted. In this case, it is preferable to repeatedly neutralize the wet cake using the neutralizing solvent until the neutralizing solvent removed by filtration from the wet cake has a pH of 6 to 8.

In the producing method of the present invention, the usage of ethylene oxide can be reduced, so that the amount of impurities such as by-products in the reaction system and wet cake is small. Therefore, a burden required for washing the reaction system and neutralizing the wet cake is reduced as compared with that in the conventional producing methods.

When the neutralized wet cake is dried, the intended hydroxyethyl cellulose having an average additional molar number of ethylene oxide per glucose unit in a range of 0.1 to 1.0 mol is obtained. The obtained hydroxyethyl cellulose does not exhibit water solubility because the average additional molar number of ethylene oxide is so small that the number of hydroxyethyl group that is a hydrophilic group is small. The determination criteria for water solubility are as described in Examples described later.

In the producing method of the present invention, the obtained hydroxyethyl cellulose is then mechanically pulverized. In this way, the intended water-soluble hydroxyethyl cellulose is obtained. Although the hydroxyethyl cellulose obtained in the previous step has a small average additional molar number of ethylene oxide, it is considered that addition of ethylene oxide to the glucose units is relatively uniform so that when physical shock is applied by the mechanical pulverization, the crystal structure of cellulose is easily disintegrated, thereby exhibiting water solubility. The average additional molar numbers of ethylene oxide in the hydroxyethyl cellulose before and after the pulverizing treatment in this step are usually the same as each other.

In the mechanical pulverization of the hydroxyethyl cellulose, a rotary mill such as a ball mill or a bead mill, a millstone-type grinding machine, or a pulverizer such as a high pressure homogenizer or a jet mill may be used in general. The pulverizing method is not particularly limited as long as it is a method which hardly causes deterioration of hydroxyethyl cellulose, but may be basically either a wet method or a dry method. However, a wet method is preferable, because a uniform pulverizing result may be expected, and deterioration of hydroxyethyl cellulose due to exothermic heat or excessive shock during pulverization is easily suppressed.

The water-soluble hydroxyethyl cellulose obtained by the producing method of the present invention has an average additional molar number of ethylene oxide per glucose unit of 0.1 to 1.0 mol. In a particularly preferred embodiment, the average additional molar number is in a lower range of 0.1 mol or more and less than 0.7 mol.

Since a water-soluble hydroxyethyl cellulose obtained by conventional producing methods has an average additional molar number of ethylene oxide of about 1.5 to about 2.5, an aqueous solution of the water-soluble hydroxyethyl cellulose exhibits a sol physical property. On the other hand, a water-soluble hydroxyethyl cellulose of the present invention has a loss tangent (tan $\delta$) of less than 1.0 in the frequency range of 0.1 to 100 rad/s when its aqueous solution having a concentration of 2% by mass is prepared, and thus exhibits a typical gel physical property. Although the reason why the rheological characteristics differs in this way is not clear, this is surmised due to the fact that the water-soluble hydroxyethyl cellulose of the present invention has hydroxyethyl groups that are hydrophilic groups uniformly present on the whole molecule, while the added amount of hydroxyethyl group is smaller than that for conventional one, so that hydrophobic moieties are uniformly present on the whole molecule, with the result that association through the hydrophobic moieties occurs in water.

A water-soluble hydroxyethyl cellulose of the present invention can be used, as well as a conventional water-soluble hydroxyethyl cellulose, as a thickener, emulsion stabilizer, dispersant, water retention agent, protective colloid agent or the like in various industrial fields involving, for example, cosmetics, medicines and toiletry products.

On the other hand, since the water-soluble hydroxyethyl cellulose of the present invention is different in rheological characteristics from a conventional water-soluble hydroxyethyl cellulose, development of applications different from those of conventional water-soluble hydroxyethyl cellulose can be expected. For example, when the water-soluble hydroxyethyl cellulose of the invention is used in the field of cosmetics, due to the rheological characteristics required of a gel, development of products with less slimy feeling is expected. In addition, the function to prevent separation and sedimentation of various ingredients and medical agents is also expected. Accordingly, new usage or more applicability in industrial fields as new functional agents is expected. Furthermore, also in utilization as an emulsion stabilizer, dispersant, water retention agent, protective colloid agent or the like similar to the conventional one, in addition to the characteristics required of a conventional nonionic water-soluble polymer, improvement of efficiency or a new function can be expected based on the uniform presence of hydrophilic moieties and hydrophobic moieties on the whole molecule.

EXAMPLES

Hereinafter, a specific description is made of the present invention with reference to Examples, Comparative Examples and the like, but the present invention is not limited at all by these Examples and the like.

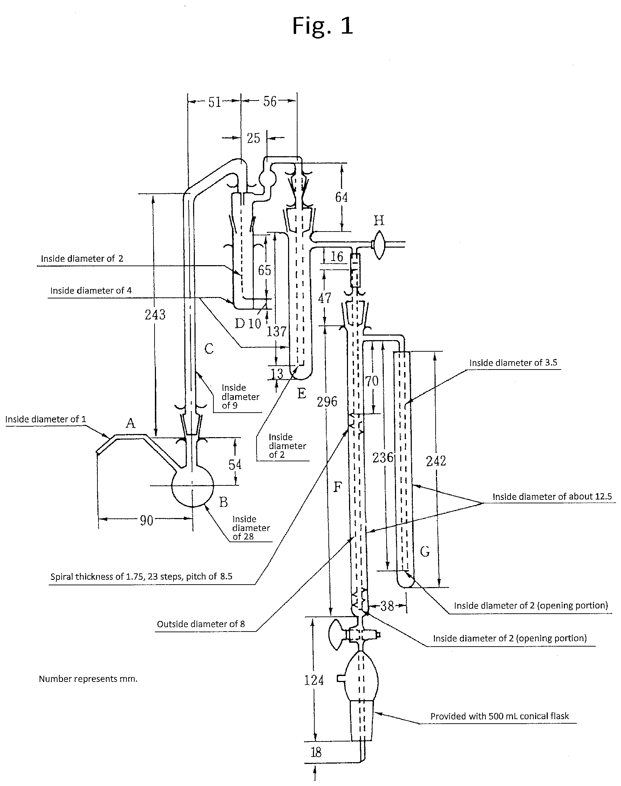

In the Examples and the like, the average additional molar number of ethylene oxide per glucose unit of hydroxyethyl cellulose is calculated by measuring the required items using the apparatus described in Jananese Pharmaceutical Excipients 1993 supervised by Examination Division, Pharmaceutical Affairs Bureau, the Ministry of Health and Welfare of Japan, Yakuji Nippo, Sections 250 to 254 "Hydroxyethylcellulose, Quantitative Method". The specific calculation method is as follows. In the following description, A to H are symbols that are given in the drawing (Fig. 1) of the apparatus described in Pharmaceutical Excipients 1993 mentioned above.

In decomposition flask B, 0.075g of hydroxyethyl cellulose (a) dried at 105°C for 2 hours was placed and 5 mL of 57% by mass hydroiodic acid was added thereto. In addition, in gas scrubber D, 1.0 g of red phosphorus was placed and ion-exchanged water was added thereto in an amount such that the height of solution was 3 to 4 cm. Furthermore, in ethyl iodide absorption tube E, ethylene absorption tube F and bromine absorption tube G, 10 mL of a silver nitrate/ethanol test solution, 15 mL of a bromine/acetic acid test solution and 10 mL of a potassium iodide solution were placed, respectively.

Decomposition flask B was heated at 140 to 145°C for 60 to 90 minutes, while, through carbon dioxide introducing tube A, carbon dioxide was supplied such that 1 or 2 bubbles were formed per second. When fog in air-cooled tube C disappeared and the solution in ethyl iodide absorption tube E became substantially clear, ethyl iodide absorption tube E was heated to 50 to 60°C and the connection between ethyl iodide absorption tube E and ethylene absorption tube F was released. Into a 300 mL conical beaker containing 10 mL of potassium iodide, the solutions in ethylene absorption tube F and bromine absorption tube G were transferred, and water that had been used for washing ethylene absorption pipe F and bromine absorption pipe G was added thereto to reach 150 mL. Subsequently, the conical beaker was capped and left to stand for 5 minutes. To this was added 2 mL of a starch test solution as an indicator, followed by titration with a 0.05 N sodium thiosulfate solution (c). A blank test was conducted in the same manner, followed by titration with a 0.05 N sodium thiosulfate solution (b). Furthermore, into a 300 mL conical beaker, the solution in ethyl iodide absorption tube E was transferred, and water that had been used for washing ethyl iodide absorption tube E was added thereto to reach 150 mL. To this were added 3 mL of dilute sulfuric acid and 3 mL of a ferric ammonium sulfate test solution as an indicator, followed by titration with a 0.05 N ammonium thiocyanate solution (e). A blank test was conducted in the same manner, followed by titration with 0.05 N ammonium thiocyanate solution (d).

The ignition residue (% by mass) was determined by the following procedure. In a 50 mL-volume magnetic crucible whose mass is known, 4g of weighed hydroxyethyl cellulose was placed, and then 2 mL of 98% by mass sulfuric acid was added. The contents were superheated at 650°C for 2 hours for ashing, and the mass X (g) of the obtained ash was weighed. Aside from this, 4 g of hydroxyethyl cellulose was weighed, and the weighed hydroxyethyl cellulose was dried at 105°C for 2 hours and then weighed. From the loss on drying, the moisture content Y (% by mass) was determined. The ash content was sodium sulfate, but the ignition residue was expressed as sodium carbonate equivalent, and the ignition residue (% by mass) was determined from equation (1) below.

[Equation 1]

$$\text{Ignition residue (\% by mass)} =$$

$$[X/\{4 \times (1 - Y/100)\}] \times 0.746 \times 100 \qquad (1)$$

The average additional molar number of ethylene oxide per glucose unit of hydroxyethyl cellulose was determined from equation (2) below.
[Equation 2]

$$\text{Average additional molar number of ethylene oxide} =$$

$$(Ox/44)/\{(100 - Ox)/162\} \qquad (2)$$

In equation (2), Ox is oxyethylene group (% by mass) obtained by equation (3) below.
[Equation 3]

$$Ox = \{(b - c) + 2 \times (d - e)\}/\{a \times (100 - f)\} \times 11.01$$

$$(3)$$

In equation (3), "a" to "f" are as follows.

a: Amount of sample (g)
b: Sodium thiosulfate blank test (mL)
c: Titer of sodium thiosulfate (mL)
d: Ammonium thiocyanate blank test (mL)
e: Titer of ammonium thiocyanate (mL)
f: Ignition residue (% by mass) $\times$ 1.547

In equation "f", 1.547 is a value obtained by dividing the molecular weight 82 of sodium acetate by the value obtained by dividing the molecular weight 106 of sodium carbonate by 2.

[Producing Example] (Preparation of alkali cellulose)

In a 5 L-volume flask, 50 g of cellulose (pulp manufactured by Nippon Paper Industries Co., Ltd.: trade name "NDPT") was immersed in 2,000 g of a 20% by mass sodium hydroxide aqueous solution, followed by stirring and mixing for 30 minutes while maintaining the temperature at 30°C. The sodium hydroxide aqueous solution was removed by pressure filtration of slurry obtained in the previous step to yield 150 g of wet cake-like alkali cellulose.

[Example 1]

Into a 1 L-volume kneader, 150 g of the wet cake-like alkali cellulose obtained in Producing Example, 3.5 g of ethylene oxide and 50 g of methyl isobutyl ketone were charged while the temperature was maintained at 15°C, followed by stirring and mixing for 30 minutes at the same temperature. Next, the mixture was heated to 50°C, while stirring and mixing were continued to react the alkali cellulose with the ethylene oxide for 3 hours.
The reaction product in the kneader was filtered off to yield wet cake. The wet cake was washed with a washing solvent having a composition of 100 g of methyl isobutyl ketone, 100 g of methanol and 50 g of water. Furthermore, 2 g of acetic acid was added to a washing solvent having the same composition as above to prepare a neutralizing solvent, and using 50 g of the neutralizing solvent, the wet cake was further washed for neutralization. As a result, 180 g of neutralized wet cake was obtained. Then, the neutralized wet cake was dried to yield 50 g of hydroxyethyl cellulose.
Next, the obtained hydroxyethyl cellulose was mechanically pulverized. Here, a 2% by mass aqueous dispersion (slurry) of hydroxyethyl cellulose was prepared, and this slurry was processed using a jet mill. A jet mill, the product name "G-smasher" from Ricks Corporation, was used here, and processing conditions were set as below. When the average additional molar number of ethylene oxide per glucose unit of the hydroxyethyl cellulose after pulverization was measured, it was 0.1 mol.

Air pressure: 0.6 MPa
Collision plate: flat plate
Amount of slurry: 300 mL
Supplying rate of slurry: 100 mL/min
Number of passes: 10

[Example 2]

The same operation as in Example 1 was performed except that the used amount of ethylene oxide was changed to 6.5 g to yield 190 g of neutralized wet cake. Then, the neutralized wet cake was dried to yield 52 g of hydroxyethyl cellulose. The obtained hydroxyethyl cellulose was mechanically pulverized in the same manner as in Example 1. When the average additional molar number of ethylene oxide per glucose unit of the hydroxyethyl cellulose after pulverization was measured, it was 0.2 mol.

[Example 3]

The same operation as in Example 1 was performed except that the used amount of ethylene oxide was changed to 16 g to yield 200 g of neutralized wet cake. Then, the neutralized wet cake was dried to yield 54 g of hydroxyethyl cellulose. The obtained hydroxyethyl cellulose was mechanically pulverized in the same manner as in Example 1. When the average additional molar number of ethylene oxide per glucose unit of the hydroxyethyl cellulose after pulverization was measured, it was 0.5 mol.

[Example 4]

The same operation as in Example 1 was performed except that the used amount of ethylene oxide was changed to 25 g to yield 212 g of neutralized wet cake. Then, the neutralized wet cake was dried to yield 58 g of hydroxyethyl cellulose. The obtained hydroxyethyl cellulose was mechanically pulverized in the same manner as in Example 1. When the average additional molar number of ethylene oxide per glucose unit of the hydroxyethyl cellulose after pulverization was measured, it was 0.7 mol.

[Example 5]

The same operation as in Example 1 was performed except that the used amount of ethylene oxide was changed to 35 g to yield 230 g of neutralized wet cake. Then, the neutralized wet cake was dried to yield 62 g of hydroxyethyl cellulose. The obtained hydroxyethyl cellulose was mechanically pulverized in the same manner as in Example 1. When the average additional molar number of ethylene oxide per glucose unit of the hydroxyethyl cellulose after pulverization was measured, it was 1.0 mol.

[Comparative Example 1]

The alkali cellulose obtained in Producing Example without undergoing reaction with ethylene oxide was mechanically pulverized in the same manner as in Example 1.

[Comparative Example 2]

The same operation as in Example 1 was performed except that the used amount of ethylene oxide was changed to 50 g to yield 220 g of neutralized wet cake. Then, the neutralized wet cake was dried to yield 68 g of hydroxyethyl cellulose. When the average additional molar number of ethylene oxide per glucose unit of the hydroxyethyl cellulose was measured, it was 1.5 mol.

[Comparative Example 3]

Into a 1 L-volume kneader, 50 g of cellulose (pulp manufactured by Nippon Paper Industries Co., Ltd.: trade name "NDPT"), 80 g of a 20% by mass sodium hydroxide aqueous solution and 300 g of tert-butanol were charged while maintaining the temperature at 30°C, followed by stirring and mixing for 30 minutes at the same temperature. Next, the temperature was cooled to 15°C, 16 g of ethylene oxide was added, followed by further stirring and mixing at the same temperature for 30 minutes. Thereafter, the mixture was heated to 50°C, while stirring and mixing were continued to conduct reaction for 3 hours.

The reaction product in the kneader was filtered off to yield wet cake. The wet cake was washed with a washing solvent having a composition of 100 g of methyl isobutyl ketone, 100 g of methanol and 50 g of water. Furthermore, 2 g of acetic acid was added to a washing solvent having the same composition as above to prepare a neutralizing solvent, and using 50 g of the neutralizing solvent, the wet cake was further washed for neutralization. As a result, 200 g of neutralized wet cake was obtained. Then, the neutralized wet cake was dried to yield 54 g of hydroxyethyl cellulose. The obtained hydroxyethyl cellulose was mechanically pulverized in the same manner as in Example 1. When the average additional molar number of ethylene oxide per glucose unit of the hydroxyethyl cellulose after pulverization was measured, it was 0.5 mol.

[Evaluation]

(1) Water solubility

The water solubility of each hydroxyethyl cellulose before pulverization obtained in Examples 1 to 5 and Comparative Example 3 and hydroxyethyl cellulose obtained in Comparative Example 2 was examined. Here, a 2% by mass aqueous dispersion of each hydroxyethyl cellulose was prepared, and 40 g of the dispersion was placed in a transparent polypropylene resin container (outer diameter 29 mm, height 118 mm). Then, the dispersion in the container was treated using a centrifugal separator (model number "N-40α" from KOKUSAN Co., Ltd.) under the condition of 2,000 rpm for 5 minutes, and the presence or absence of precipitation separation was visually checked. When the precipitation separation was not observed, it was judged to have water solubility, whereas when the precipitation separation was observed, it was judged to have no water solubility.

In addition, the water solubility of each hydroxyethyl cellulose after pulverization obtained in Examples 1 to 5 and Comparative Example 3 and alkali cellulose after pulverization obtained in Comparative Example 1 was examined. Here, 40 g of each slurry after pulverization obtained in Examples 1 to 5 and Comparative Examples 1 and 3 was placed in a transparent polypropylene resin container (outer diameter 29 mm, height 118 mm). Then, the slurry in the container was treated using a centrifugal separator (model number "N-40α" from KOKUSAN Co., Ltd.) under the condition of 2,000 rpm for 5 minutes, and the presence or absence of precipitation separation was visually checked. When the precipitation separation was not observed, it was judged to have water solubility, whereas when the precipitation separation was observed, it was judged to have no water solubility.

The results of the above are shown in Table 1.

[Table 1]

Table 1

| | Average additional molar number of ethylene oxide | Water solubility | |
|---|---|---|---|
| Example 1 | 0.1 | Before pulverization | Absent |
| | | After pulverization | Present |
| Example 2 | 0.2 | Before pulverization | Absent |
| | | After pulverization | Present |
| Example 3 | 0.5 | Before pulverization | Absent |
| | | After pulverization | Present |
| Example 4 | 0.7 | Before pulverization | Absent |
| | | After pulverization | Present |
| Example 5 | 1 | Before pulverization | Absent |
| | | After pulverization | Present |
| Comparative Example 1 | - | Absent | |
| Comparative Example 2 | 1.5 | Present | |
| Comparative Example 3 | 0.5 | Before pulverization | Absent |
| | | After pulverization | Absent |

(2) Rheological property

The rheological property of each hydroxyethyl cellulose after pulverization obtained in Examples 1 to 5 and hydroxyethyl cellulose obtained in Comparative Example 2 evaluated as having water solubility in evaluation of the water solubility was measured. Here, for each hydroxyethyl cellulose after pulverization obtained in Examples 1 to 5, the slurry used for evaluation of the water solubility (that is, the aqueous solution of hydroxyethyl cellulose after pulverization) was used as a target for measurement. In addition, for hydroxyethyl cellulose obtained in Comparative Example 2, the 2% by mass aqueous solution prepared for evaluation of the water solubility was used as a target for measurement. The measuring apparatus and measuring conditions are as follows.

Measuring device:

Rheometer: model number "AR-2000" from TA Instruments
Plate: 60 mm, 1° cone plate
Measuring temperature: 25°C
Measurement of distortion dispersion: 0.1% to 1,000% (1 Hz)
Measurement of frequency dispersion: 300 rad/s to 0.1 rad/s (distortion 1%)

In general, when the value of loss tangent (tan $\delta$) determined by dividing the loss elastic modulus (G") of an aqueous solution by the storage elastic modulus (G') (G"/G') is less than 1.0 (in other words, when the storage elastic modulus (G') is larger than the loss elastic modulus (G")), the aqueous solution is evaluated as exhibiting a gel physical property. Also in this evaluation, when the value of tan $\delta$ in the frequency range of 0.1 to 100 rad/s is less than 1.0, the solution was evaluated as exhibiting a gel physical property. The results are shown in Table 2.

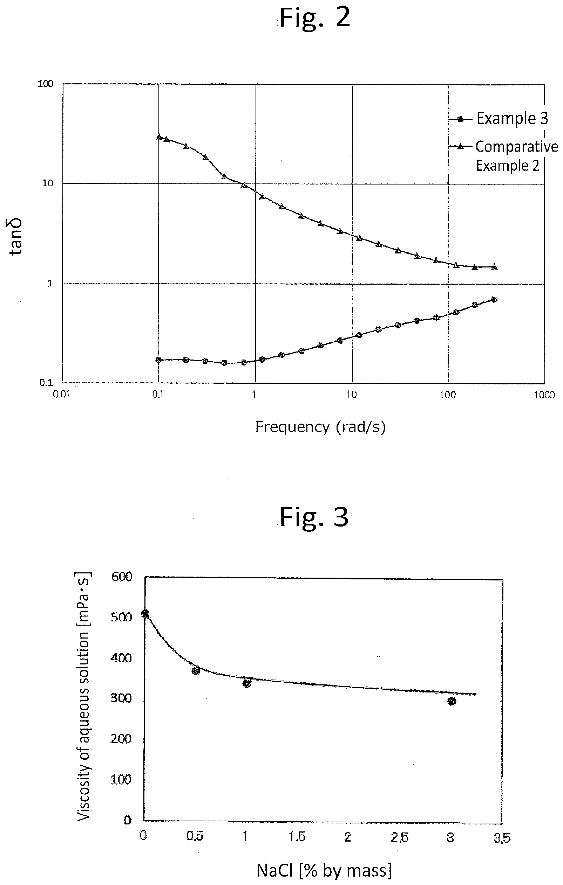

For the slurry of Example 3 and the aqueous solution of hydroxyethyl cellulose obtained in Comparative Example 2, the values of the loss tangent (tan $\delta$) determined from the storage elastic modulus (G') and loss elastic modulus (G") (i.e., G"/G') in the frequency range from 0.1 to 100 rad/s are shown in Fig. 2. According to Fig. 2, it is found that the slurry of Example 3 having a loss tangent (tan $\delta$) of less than 1.0 in the above frequency range exhibits a gel physical property, whereas the aqueous solution of hydroxyethyl cellulose obtained in Comparative Example 2 having a loss tangent (tan $\delta$) of 1.0 or more in the same frequency range exhibits a sol physical property.

[Table 2]

Table 2

| | Loss tangent (tan $\delta$) | |
|---|---|---|
| | 1rad/s | 100rad/s |
| Example 1 | 0.05 | 0.05 |
| Example 2 | 0.06 | 0.05 |
| Example 3 | 0.16 | 0.50 |
| Example 4 | 0.22 | 0.65 |
| Example 5 | 0.35 | 0.76 |
| Comparative Example 2 | 8.1 | 1.6 |

(3) Salt tolerance

For 50 g of the slurry obtained in Example 3, the viscosity when 0.5% by mass, 1% by mass or 3% by mass sodium chloride (NaCl) was added in a condition where the temperature was adjusted to 25°C was measured by a BM-type viscometer (manufactured by TOKIMEC, Inc.). On this occasion, the rotation speed of rotor No. 2 was set to 30 rpm. The results are shown in Fig. 3.

The water-soluble hydroxyethyl cellulose of the present invention represented by the water-soluble hydroxyethyl cellulose obtained in Example 3 is of nonionic type, and referring to Fig. 3, the change in viscosity influenced by electrolyte in the aqueous solution is small. Therefore, the water-soluble hydroxyethyl cellulose is expected to exhibit good stability when used in various applications.

**Claims**

1. A method for producing water-soluble hydroxyethyl cellulose, the method comprising steps of:

   reacting ethylene oxide with alkali cellulose such that an average additional molar number of ethylene oxide per glucose unit of the alkali cellulose is 0.1 to 1.0 mol to prepare hydroxyethyl cellulose; and
   mechanically pulverizing the hydroxyethyl cellulose.

2. The method for producing water-soluble hydroxyethyl cellulose according to claim 1, wherein the alkali cellulose is that which is obtained by separating a liquid component from slurry obtained by immersing the cellulose in an aqueous solution of an alkali for reaction of the cellulose with the alkali.

3. The method for producing water-soluble hydroxyethyl cellulose according to claim 1 or 2, wherein the ethylene oxide is reacted such that the average additional molar number is less than 0.7 mol.

4. Water-soluble hydroxyethyl cellulose having an average additional molar number of ethylene oxide per glucose unit of 0.1 to 1.0 mol.

5. The water-soluble hydroxyethyl cellulose according to claim 4, wherein the average additional molar number is less than 0.7 mol.

6. The water-soluble hydroxyethyl cellulose according to claim 4 or 5, which has a loss tangent (tan $\delta$) of less than 1.0 in a frequency range of 0.1 to 100 rad/s as a 2% by mass aqueous solution.

# Fig. 1

Inside diameter of 2

Inside diameter of 4

Inside diameter of 1

Inside diameter of 9

Inside diameter of 2

Inside diameter of 28

Inside diameter of 3.5

Inside diameter of about 12.5

Inside diameter of 2 (opening portion)

Inside diameter of 2 (opening portion)

Spiral thickness of 1.75, 23 steps, pitch of 8.5

Outside diameter of 8

Number represents mm.

Provided with 500 mL conical flask

# Fig. 2

# Fig. 3

## INTERNATIONAL SEARCH REPORT

International application No.

PCT/JP2017/033789

### A. CLASSIFICATION OF SUBJECT MATTER
*C08B11/08*(2006.01)i

According to International Patent Classification (IPC) or to both national classification and IPC

### B. FIELDS SEARCHED

Minimum documentation searched (classification system followed by classification symbols)
C08B11/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
CAplus/REGISTRY(STN)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2002-536507 A (Hercules Inc.),<br>29 October 2002 (29.10.2002),<br>entire text (particularly, example 13)<br>& US 6602994 B1          & WO 2000/047628 A2<br>example 13<br>& EP 1078008 A2          & KR 10-2001-0042551 A | 1,3-6<br>1-6 |
| X<br>Y | JP 2009-209361 A (SE Tylose GmbH & Co. KG),<br>17 September 2009 (17.09.2009),<br>entire text (particularly, synthesis examples 3<br>to 5 (among others, synthesis example 5))<br>& US 2009/0221813 A1<br>examples 3 to 5<br>& EP 2098539 A1          & KR 10-2009-0094759 A | 1,3-6<br>1-6 |

☒ Further documents are listed in the continuation of Box C.   ☐ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 06 October 2017 (06.10.17) | 24 October 2017 (24.10.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2017/033789

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2009/123148 A1 (Asahi Kasei Fibers Corp.),<br>08 October 2009 (08.10.2009),<br>entire text (particularly, example 11)<br>& US 2011/0020954 A1<br>example 11<br>& US 2015/0293082 A1 & EP 2261261 A1<br>& KR 10-2010-0117132 A & CN 101981057 A | 1,3-6<br>1-6 |
| X<br>Y | WO 2009/063856 A1 (Kao Corp.),<br>22 May 2009 (22.05.2009),<br>entire text (particularly, paragraphs [0025] to<br>[0030], [0039] to [0043])<br>& JP 2009-120716 A & US 2010/0311964 A1<br>paragraph [0098] to [0102]<br>& EP 2210905 A1 & CN 101855246 A<br>& KR 10-2010-0074252 A | 1,3-6<br>1-6 |
| X<br>Y | JP 2008-536959 A (Hercules Inc.),<br>11 September 2008 (11.09.2008),<br>entire text (particularly, claim 17; paragraph<br>[0078]; examples 2, 6, 8, 11, 14, 15)<br>& US 2006/0199742 A1<br>examples 2, 6, 8, 11, 14, 15<br>& WO 2006/094211 A1 & EP 1853633 A1<br>& KR 10-2007-0110404 A | 1,3-6<br>1-6 |
| X<br>Y | JP 2005-529830 A (Dow Global Technologies<br>Inc.),<br>06 October 2005 (06.10.2005),<br>entire text (particularly, comparative example<br>E)<br>& US 2005/0139130 A1<br>comparative example E<br>& WO 2003/106366 A1 & EP 1515924 A1<br>& CN 1659112 A & KR 10-2005-0014853 A<br>& CN 101250384 A | 1,3-6<br>1-6 |
| X<br>Y | JP 2005-179253 A (Shin-Etsu Chemical Co.,<br>Ltd.),<br>07 July 2005 (07.07.2005),<br>entire text (particularly, claim 1; paragraph<br>[0026])<br>& US 2005/0136084 A1<br>claim 1; paragraph [0040]<br>& EP 1543828 A1 | 1,3-6<br>1-6 |
| X<br>Y | JP 2004-307598 A (The Nippon Synthetic<br>Chemical Industry Co., Ltd.),<br>04 November 2004 (04.11.2004),<br>entire text (particularly, paragraph [0045])<br>(Family: none) | 1,3-6<br>1-6 |

Form PCT/ISA/210 (continuation of second sheet) (January 2015)

**INTERNATIONAL SEARCH REPORT**

International application No.

PCT/JP2017/033789

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2003-252902 A (Shin-Etsu Chemical Co., Ltd.), 10 September 2003 (10.09.2003), entire text (particularly, paragraphs [0018], [0020]) & US 2003/0166918 A1 paragraphs [0031], [0035] & EP 1342733 A1 | 1,3-6<br>1-6 |
| X<br>Y | JP 2002-512271 A (Wolff Walsrode AG.), 23 April 2002 (23.04.2002), entire text (particularly, example 2 (paragraph [0031])) & WO 1999/054361 A1 Beispiel 2 & EP 1080114 A1 | 1,3-6<br>1-6 |
| X<br>Y | JP 2001-510207 A (Wolff Walsrode AG.), 31 July 2001 (31.07.2001), entire text (particularly, examples 5, 6) & US 6482940 B1 examples 5, 6 & US 2003/0032798 A1 & WO 1999/003891 A1 & EP 0996641 A1 | 1,3-6<br>1-6 |
| X<br>Y | JP 09-052903 A (Wolff Walsrode AG.), 25 February 1997 (25.02.1997), entire text (particularly, examples 2, 3) & US 5717087 A examples 2, 3 & EP 0761690 A1 | 1,3-6<br>1-6 |
| X<br>Y | JP 56-002302 A (Hoechst AG.), 12 January 1981 (12.01.1981), entire text (particularly, synthesis examples 1 to 3) & US 4310663 A examples 1 to 3 & US 4363784 A & EP 0022923 A1 | 1,3-6<br>1-6 |
| X<br>Y | JP 53-086750 A (Union Carbide Corp.), 31 July 1978 (31.07.1978), entire text (particularly, examples 1, 3, 5 to 8) & US 4084060 A examples 1, 3, 5 to 8 & GB 1553317 A & DE 2751411 A & BE 860904 A & NL 7712688 A | 1,3-6<br>1-6 |
| Y | Cellulose no Jiten, Asakura Publishing Co., Ltd., 10 November 2000 (10.11.2000), page 490 | 1-6 |

Form PCT/ISA/210 (continuation of second sheet) (January 2015)

**INTERNATIONAL SEARCH REPORT**

International application No.

PCT/JP2017/033789

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-001579 A (Sumitomo Seika Chemicals Co., Ltd.), 05 January 2012 (05.01.2012), entire text (particularly, preparation example 1) (Family: none) | 1-6 |
| Y | JP 2005-171089 A (Sumitomo Seika Chemicals Co., Ltd.), 30 June 2005 (30.06.2005), entire text (particularly, paragraph [0052]) (Family: none) | 1-6 |
| Y | JP 2003-231701 A (Sumitomo Seika Chemicals Co., Ltd.), 19 August 2003 (19.08.2003), entire text (particularly, preparation examples 1, 2) (Family: none) | 1-6 |
| Y | JP 2003-171401 A (Sumitomo Seika Chemicals Co., Ltd.), 20 June 2003 (20.06.2003), entire text (particularly, preparation examples 1, 2) (Family: none) | 1-6 |
| Y | JP 2003-155301 A (Sumitomo Seika Chemicals Co., Ltd.), 27 May 2003 (27.05.2003), entire text (particularly, paragraph [0051]) (Family: none) | 1-6 |
| Y | JP 2003-012535 A (Sumitomo Seika Chemicals Co., Ltd.), 15 January 2003 (15.01.2003), entire text (particularly, paragraph [0053]) (Family: none) | 1-6 |
| Y | JP 2002-265502 A (Sumitomo Seika Chemicals Co., Ltd.), 18 September 2002 (18.09.2002), entire text (particularly, paragraph [0040]) (Family: none) | 1-6 |

Form PCT/ISA/210 (continuation of second sheet) (January 2015)

**INTERNATIONAL SEARCH REPORT**

International application No.

PCT/JP2017/033789

C (Continuation). DOCUMENTS CONSIDERED TO BE RELEVANT

| Category* | Citation of document, with indication, where appropriate, of the relevant passages | Relevant to claim No. |
|---|---|---|
| Y | JP 58-196202 A (Wolff Walsrode AG.), 15 November 1983 (15.11.1983), entire text (particularly, example 1) & US 4508895 A example 1 & EP 0093368 A1 | 1-6 |
| Y | JP 2016-065227 A (Shin-Etsu Chemical Co., Ltd.), 28 April 2016 (28.04.2016), entire text (particularly, paragraph [0012]) & US 2016/0083483 A1 paragraph [0019] & EP 2998340 A1 & CN 105440143 A & KR 10-2016-0034808 A | 1-6 |
| Y | JP 2008-534735 A (Hercules Inc.), 28 August 2008 (28.08.2008), entire text (particularly, claims 51, 67; paragraph [0053]) & WO 2006/107294 A1 claims 51, 67; page 17 & EP 1866341 A1 & CN 1968966 A | 1-6 |
| A | WO 2010/095674 A1 (Sumitomo Seika Chemicals Co., Ltd.), 26 August 2010 (26.08.2010), entire text (Family: none) | 1-6 |
| A | JP 2008-535937 A (Hercules Inc.), 04 September 2008 (04.09.2008), entire text & US 2006/0182703 A1 & WO 2006/088953 A1 & EP 1858970 A1 & KR 10-2007-0107769 A & CN 101160350 A | 1-6 |

Form PCT/ISA/210 (continuation of second sheet) (January 2015)

## INTERNATIONAL SEARCH REPORT

International application No.

PCT/JP2017/033789

"A step for preparing a hydroxyethyl cellulose by reacting an alkali cellulose with ethylene oxide in such a manner as to give an average addition molar number of ethylene oxide of 0.1-1.0 mol per glucose unit" described in claim 1 merely specifies the preparation step depending on a result to be achieved or an effect expected by or a desire of the applicant. That is, no particular means for achieving the aforesaid result or effect is specified thereby.

Therefore, claim 1 does not comply with the requirement of clarity prescribed under PCT Article 6.

This opinion may be also applied to claims 2, 3 referring to claim 1.

For the reason as described above, in the end, prior art documents were searched in this international search with regard to the inventions which disclose a hydroxyethyl cellulose having an average addition molar number of ethylene oxide of 0.1-1.0 mol, on the assumption that the above preparation step had been carried out.

It is considered that claim 6 is an invention of a product relating to "a water-soluble hydroxyethyl cellulose". However, it is unknown what limitation is imposed by the matter specifying the invention "a 2 mass% aqueous solution has a loss tangent ($\tan\delta$) of less than 1.0 within the frequency range of 0.1-100 rad/s" to a product that is a water-soluble hydroxyethyl cellulose (hereinafter sometimes called HEC) having an average addition molar number of ethylene oxide of 0.1-1.0 mol per glucose unit or to a product having the aforesaid average addition molar number of less than 0.7 mol.

Therefore, claim 6 does not comply with the requirement of clarity prescribed under PCT Article 6.

For the reason as described above, prior art documents were searched in this international search on the assumption that any hydroxyethyl cellulose satisfying the requirement "the average addition molar number of ethylene oxide is 0.1-1.0 mol per glucose unit" also satisfies the requirement "a 2 mass% aqueous solution has a loss tangent ($\tan\delta$) of less than 1.0 within the frequency range of 0.1-100 rad/s".

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5975902 B
- JP H01123801 B
- JP H06199902 B
- JP 2003012535 A

**Non-patent literature cited in the description**

- Hydroxyethylcellulose, Quantitative Method. Japanese Pharmaceutical Excipients 1993 supervised by Examination Division, Pharmaceutical Affairs Bureau, the Ministry of Health and Welfare of Japan. Yakuji Nippo, 1993
- Hydroxyethylcellulose, Quantitative Method. Jananese Pharmaceutical Excipients 1993 supervised by Examination Division, Pharmaceutical Affairs Bureau, the Ministry of Health and Welfare of Japan. Yakuji Nippo
- *Pharmaceutical Excipients,* 1993